# EUROPÄISCHE PATENTANMELDUNG

(11) **EP 1 186 514 A2**
(43) Veröffentlichungstag der Anmeldung: **13.03.2002**
(21) Anmeldenummer: 01121512.6
(22) Anmeldetag: 08.09.2001
(51) Int. Cl.: B62D 7/16, B62D 3/12

(54) **Lenkeinrichtung und Fahrzeug**

(30) Priorität: 11.09.2000 US 659248
(71) Anmelder: DEERE & COMPANY, Moline, Illinois 61265-8098 (US)
(72) Erfinder: Romig, Bernard Edwin, Illinois City, Illinois 61259 (US)
(74) Vertreter: Magin, Ludwig Bernhard

(57) **Zusammenfassung**

Fahrzeuge mit einem sehr kleinen Wendekreis bzw. solche, die auf der Stelle wenden können, wie dies beispielsweise bei Rasenmähern und Schwadlegern vorgesehen sein kann, weisen häufig Freilaufräder in Kombination mit einer Einzelradsteuerung angetriebener Räder zur Lenkung auf. Solche Anordnungen sind schwierig zu handhaben, insbesondere bei der Fahrt über nach seitwärts abfallendes Gelände, und können daher die Nutzbarkeit des Fahrzeugs einschränken. Lenkeinrichtungen vom Ackermann-Typ stellen eine gute Fahrtrichtungssteuerung zur Verfügung, aber sie erlauben es normalerweise nicht, die Räder über einen Bereich von 180° zu bewegen oder sie sind komplex in der Ausführung.

Es wird eine Lenkeinrichtung vorgeschlagen, welche ohne die Verwendung mechanischer Verstärkungseinrichtung gute Lenkeigenschaften zur Verfügung stellt.

## Beschreibung

Die Erfindung betrifft eine Lenkeinrichtung mit einer Achse mit einem linken und einem rechten Arm, einem Paar von Radgabeln, welche jeweils einen oberen Endbereich, der mit einem entsprechenden Endbereich der Achse drehbar verbunden ist, sowie einen unteren Endbereich, an dem jeweils wenigstens ein Rad drehbar anbringbar ist, aufweisen, einem quer bewegbaren Lenkelement mit einem rechten und einem linken Endbereich, einem Paar von Schwenkhebeln mit jeweils einem ersten Endbereich, der mit einem entsprechenden Endbereich des Lenkelements verbunden ist, und einem zweiten Endbereich und mit einem Paar von Schwingen, welche jeweils einen ersten Endbereich, der mit dem zweiten Endbereich des entsprechenden Schwenkhebels drehbar verbunden ist, sowie einen zweiten Endbereich aufweisen, welcher drehbar mit dem entsprechenden Endbereich der Achse verbunden ist.

Fahrzeuge mit einem sehr kleinen Wendekreis bzw. solche, die auf der Stelle wenden können, wie dies beispielsweise bei Rasenmähern und Schwadlegern vorgesehen sein kann, weisen häufig Freilaufräder in Kombination mit einer Einzelradsteuerung angetriebener Räder zur Lenkung auf. Solche Anordnungen sind schwierig zu handhaben, insbesondere bei der Fahrt über nach seitwärts abfallendes Gelände, und können daher die Nutzbarkeit des Fahrzeugs einschränken. Lenkeinrichtungen vom Ackermann-Typ stellen eine gute Fahrtrichtungssteuerung zur Verfügung, aber sie erlauben es normalerweise nicht, die Räder über einen Bereich von 180° zu bewegen. Eine Lenkeinrichtung diesen Typs, bei dem die Räder um 180° gedreht werden können, wird von E. Chicurel in "Mechanism and Machine Theory", Vol. 34, No. 3 vom April 1999 beschrieben. Der gezeigte Mechanismus ist komplex und erfordert eine mechanische Verstärkungseinrichtung mit Zahnrädern oder Ketten.

Das der Erfindung zugrunde liegende Problem wird in der Komplexität bekannter Lenkeinrichtungen gesehen.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird eine Lenkeinrichtung zur Verfügung gestellt, welche lenkbare Räder umfasst bzw. mit diesen zusammenwirkt, die auf Radgabeln angebracht sind, welche drehbar mit äußeren Endbereichen einer Achse verbunden sind. An der Achse ist ein Zahnstangenzusammenbau vorgesehen, welcher eine Lenkeingangswelle zur Verbindung mit einem Lenkrad sowie ein quer bewegliches Zahnstangenelement bzw. allgemein ein Lenkelement, aufweist, wobei an jedem seiner Endbereiche ein vertikaler Zapfen angebracht ist. Ein Paar von Spurstangen bzw. Schwenkhebeln weist jeweils einen Endbereich auf, welcher mit einem entsprechenden Zapfen verbunden ist. Ein Paar von Schwingen weist jeweils einen ersten Endbereich, der drehbar mit einem zweiten Endbereich des entsprechenden Schwenkhebels verbunden ist, und einen zweiten Endbereich auf, der drehbar mit einem entsprechenden Arm bzw. einem Endbereich der Achse verbunden ist. Ein Paar von Verbindungsstangen weist jeweils einen ersten Endbereich, welcher mit einem ersten Endbereich der entsprechenden Schwinge verbunden ist, und einen zweiten Endbereich auf, welcher drehbar mit dem oberen Endbereich der entsprechenden Radgabel drehbar verbunden ist.

In der Zeichnung ist ein nachfolgend näher beschriebenes Ausführungsbeispiel der Erfindung dargestellt. Es zeigt:
- Fig. 1: eine perspektivische Darstellung einer Lenkeinrichtung,
- Fig. 2: eine Ansicht der Lenkeinrichtung aus Fig. 1 von oben und
- Fig. 3: eine Ansicht der Lenkeinrichtung aus Fig. 1 von rückwärts betrachtet.

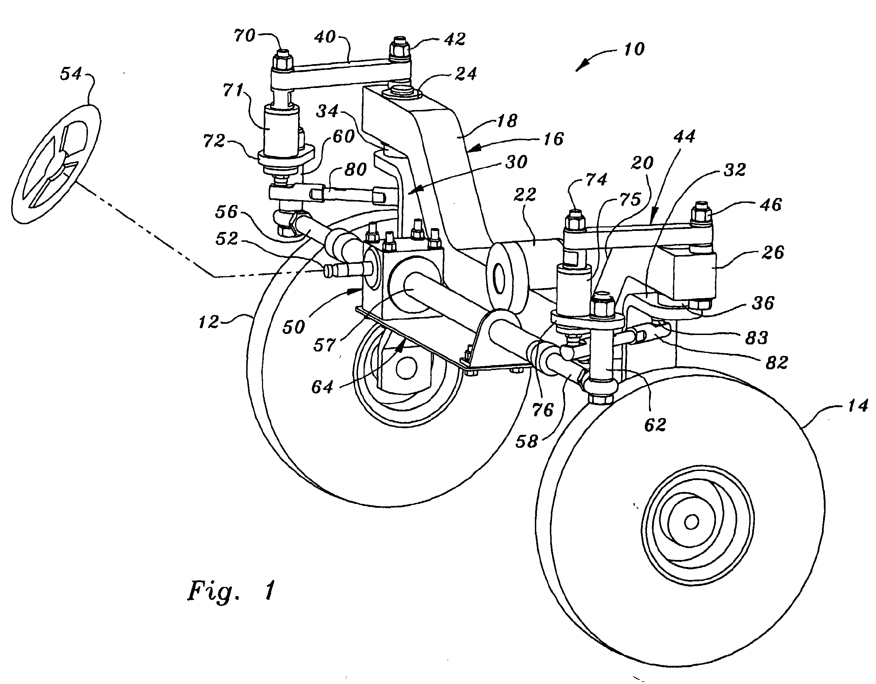

Es wird auf die Figuren 1 - 3 Bezug genommen, in denen eine Lenkeinrichtung 10 für lenkbare vordere Räder 12 und 14 eines Fahrzeugs, wie eines Rasenmähers oder Schwadlegers etc., zur Verfügung gestellt wird. Die Lenkeinrichtung 10 weist eine Achse 16 mit einem linken Arm 18 und einem rechten Arm 20 auf, welche von einem zentralen Schwenkelement 22, welches um eine zentrale, sich in Längsrichtung erstreckende Achse 16 schwenkbar ist, nach außen abstehen.

Die linken und rechten vorderen Räder 12, 14 sind mit den unteren Enden entsprechender, im Wesentlichen C-förmiger, linker und rechter halber Radgabeln 30 und 32 drehbar verbunden. Jede halbe Radgabel 30, 32 weist einen Zapfen 34, 36 auf, welcher sich von einem oberen Ende dazu nach oben erstreckt. Der Zapfen 34 wird durch eine Bohrung in einem äußeren Endbereich 24 des linken Arms 18 drehbar aufgenommen. Der Zapfen 36 wird drehbar durch eine Bohrung in einem äußeren Endbereich 26 des rechten Arms 20 aufgenommen.

Eine linke Schwinge 40 ist um einen Zapfen 42 drehbar, welcher fest in einer Bohrung in dem äußeren Endbereich 24 des linken Arms 18 angebracht und mit Bezug auf den Zapfen 34 nach vorne und seitlich außen versetzt angeordnet ist. Eine rechte Schwinge 44 ist um einen Zapfen 46 drehbar, welcher in einer Bohrung in dem äußeren Endbereich 26 des rechten Arms 20 befestigt ist, und ist mit Bezug auf den Zapfen 36 nach vorn und seitlich außen versetzt angeordnet.

An der Achse 16 ist ein üblicher Zahnstangenzusammenbau 50 angebracht, welcher eine Lenkeingangswelle 52 umfasst, welche mit einem Lenkrad 54 des Fahrzeugs verbunden ist. Ein (nicht gezeigtes) Zahnstangenelement bzw. ein Lenkelement ist in einem ortsfesten Gehäuse 57 verschiebbar angeordnet und weist linke und rechte Endbereiche 56 und 58 auf, welche sich seitlich von gegenüberliegenden Endbereichen des Gehäuses 57 nach außen erstrecken. Ein linker, vertikaler Zapfen 60 weist einen unteren Endbereich, welcher drehbar mit dem linken Endbereich 56 des Lenkelements verbunden ist, und ein rechter vertikaler Zapfen 62 einen unteren Endbereich auf, welcher drehbar mit dem rechten Endbereich 58 des Lenkelements verbunden ist. Eine Konsole 64 trägt das Gehäuse 57 und ist mit der Achse 16 verbunden.

Die linke Schwinge 40 ist an einem oberen Endbereich eines Zapfens 70 befestigt, welcher über (nicht gezeigte) Lager eine Hülse 71 drehbar trägt, welche an einem Endbereich eines Zapfens 72 befestigt ist. Die rechte Schwinge 44 ist mit einem oberen Endbereich eines Zapfens 74 verbunden, welcher über (nicht gezeigte) Lager, eine Hülse 75 drehbar trägt, welche an einem Endbereich einer Spurstange bzw. eines Schwenkhebels 76 befestigt ist. Der obere Endbereich des einen vertikalen Zapfens 60 ist mit dem anderen Endbereich der Spurstange bzw. des Schwenkhebels 72 fest verbunden. Der obere Endbereich des vertikalen Zapfens 62 ist mit dem anderen Endbereich des Schwenkhebels 76 fest verbunden.

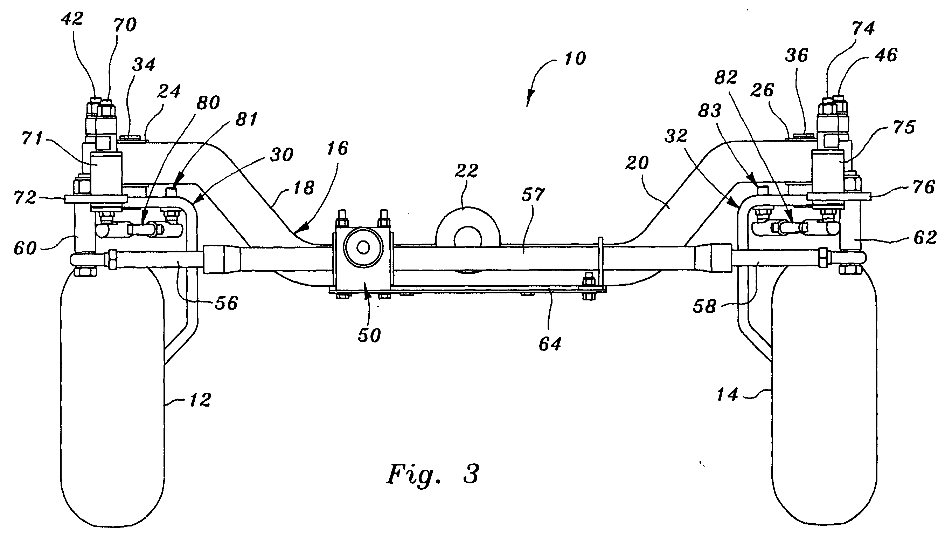

Eine linke Verbindungsstange 80 weist einen Endbereich, welcher drehbar mit dem unteren Endbereich des Zapfens 70 über ein Kugellager (nicht gezeigt) verbunden ist, und einen weiteren Endbereich auf, welcher drehbar mit dem oberen Endbereich der linken halben Radgabel 30 über einen Bolzen 81 verbunden ist. Eine rechte Verbindungsstange 82 weist einen Endbereich, der mit dem unteren Endbereich des Zapfens 74 über ein Kugellager (nicht gezeigt) verbunden ist, und einen anderen Endbereich auf, welcher mit dem oberen Endbereich der rechten halben Radgabel 32 über einen Bolzen 83 verbunden ist. Wie es am besten in Fig. 3 gesehen werden kann, ist jeder der Bolzen 81, 83 mit Bezug auf den entsprechenden Zapfen 34, 36 nach innen versetzt angeordnet.

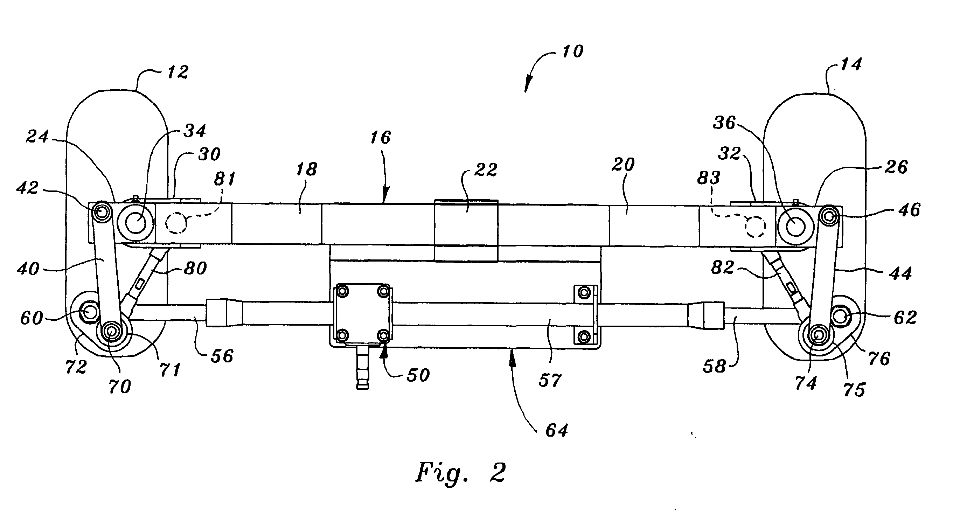

Wie es am besten in Fig. 2 gesehen werden kann, ist der Zapfen 70 innen und im Rücken des Zapfens 60 angeordnet, wenn die Räder 12, 14 gerade ausgerichtet sind, und der Zapfen 74 ist innen und im Rücken des Zapfens 62 angeordnet.

Vorzugsweise ist die Verschiebung des Lenkelements (nicht gezeigt) der Lenkeinrichtung 10 proportional zu einem vorgegebenen Lenkwinkel, welcher der Winkel ist, um den ein hypothetisches zentrales Vorderrad gedreht werden müsste, um ein Dreirad dazu zu bringen, den gleichen Wendekreis auszuführen.

Während die vorliegende Erfindung in Verbindung mit einer bestimmten Ausführungsform beschrieben wurde, ist es klar, dass viele Alternativen, Modifikationen und Variationen für den Fachmann im Lichte der vorstehenden Beschreibung offensichtlich sein werden. Beispielsweise kann die Erfindung an Fahrzeugen mit angetriebenen vorderen Rädern und lenkbaren Hinterrädern angewendet werden. Entsprechend ist es beabsichtigt, dass die Erfindung alle solchen Alternativen, Modifikationen und Variationen, welche in den Geist und den Schutzbereich der folgenden Ansprüche fallen, umfassen soll.

## Patentansprüche

1. Lenkeinrichtung (10) mit einer Achse (16) mit einem linken und einem rechten Arm (18, 20), einem Paar von Radgabeln (30, 32), welche jeweils einen oberen Endbereich, der mit einem entsprechenden Endbereich (24, 26) der Achse (16) drehbar verbunden ist, sowie einen unteren Endbereich, an dem jeweils wenigstens ein Rad (12, 14) drehbar anbringbar ist, aufweisen, einem quer bewegbaren Lenkelement mit einem rechten und einem linken Endbereich (56, 58), einem Paar von Schwenkhebeln (72, 76) mit jeweils einem ersten Endbereich, der mit einem entsprechenden Endbereich des Lenkelements drehbar verbunden ist, und einem zweiten Endbereich und mit einem Paar von Schwingen (40, 44), welche jeweils einen ersten Endbereich, der mit dem zweiten Endbereich des entsprechenden Schwenkhebels (72, 76) drehbar verbunden ist, sowie einen zweiten Endbereich aufweisen, welcher drehbar mit dem entsprechenden Endbereich (24, 26) der Achse (16) verbunden ist, **gekennzeichnet durch** ein Paar von Verbindungsstangen (80, 82), welche jeweils einen ersten Endbereich, der drehbar mit dem ersten Endbereich der entsprechenden Schwinge (40, 44) verbunden ist, und einen zweiten Endbereich aufweisen, der drehbar mit dem oberen Endbereich der entsprechenden Radgabel (30, 32) verbunden ist.

2. Lenkeinrichtung nach Anspruch 1, **gekennzeichnet durch** ein Paar Zapfen (70, 74), welche jeweils drehbar mit dem ersten Endbereich einer entsprechenden Verbindungsstange (80, 82) sowie dem zweiten Endbereich eines entsprechenden Schwenkhebels (72, 76) und fest mit dem ersten Endbereich einer entsprechenden Schwinge (40, 44) verbunden sind.

3. Lenkeinrichtung nach Anspruch 1 oder 2, **dadurch gekennzeichnet, dass** jede der Radgabeln (30, 32) einen ersten Zapfen (34, 36) aufweist, welcher sich nach oben erstreckt und drehbar in dem entsprechenden Endbereich (24, 26) der Achse (16) aufgenommen wird, wobei jede der Schwingen (40, 44) drehbar mit einem zweiten Zapfen (42, 46) verbunden ist, welcher sich von der jeweiligen Schwinge (40, 44) nach unten erstreckt und welcher an dem Endbereich (24, 26) der Achse (16) befestigt ist, und der zweite Zapfen (42, 46) bezogen auf den ersten Zapfen (34, 36) der jeweiligen Radgabel (30, 32) an dem Endbereich (24, 26) außen und vorn versetzt angeordnet ist.

4. Lenkeinrichtung nach einem oder mehreren der vorherigen Ansprüche, **gekennzeichnet durch** ein Paar von Zapfen (60, 62), auf die jeweils eine Hülse (71, 75) drehbar aufgesetzt ist, wobei jeder Zapfen (60, 62) mit einem unteren Endbereich drehbar mit dem ersten Endbereich der entsprechenden Verbindungsstange (80, 82) verbunden ist und mit einem oberen Endbereich an dem ersten Endbereich einer entsprechenden Schwinge (40, 42) befestigt ist und die Hülse (72, 75) an dem zweiten Endbereich des entsprechenden Schwenkhebels (72, 76) befestigt ist.

5. Lenkeinrichtung nach einem oder mehreren der vorherigen Ansprüche, **gekennzeichnet durch** ein Paar von Zapfen (60, 62), welche jeweils drehbar mit einem entsprechenden äußeren Endbereich (56, 58) des Lenkelements verbunden und an dem ersten Endbereich eines entsprechenden Schwenkhebels (72, 76) befestigt sind.

6. Lenkeinrichtung nach einem oder mehreren der vorherigen Ansprüche, **dadurch gekennzeichnet, dass** jede der Radgabeln (30, 32) mit Bezug auf die Achse (16) um eine erste Drehachse drehbar ist und der zweite Endbereich jeder Verbindungsstange (80, 82) mit der entsprechenden Radgabel (30, 32) um eine zweite Drehachse drehbar verbunden ist, welche mit Bezug auf die erste Drehachse innen angeordnet ist.

7. Fahrzeug, insbesondere ein Fahrzeug zur Rasen-, Garten- und Grundstückspflege mit einer Lenkeinrichtung nach einem oder mehreren der vorherigen Ansprüche.
